# EUROPÄISCHE PATENTANMELDUNG

(11) **EP 3 208 061 A1**
(43) Veröffentlichungstag der Anmeldung: **23.08.2017**
(21) Anmeldenummer: 17156274.7
(22) Anmeldetag: 15.02.2017
(51) Int. Cl.: B28C 9/04, B28C 5/00, C04B 40/00, C04B 40/06, C04B 28/02

(54) **VERFAHREN ZUR HERSTELLUNG EINES BETONBAUSTOFFES**

(30) Priorität: 15.02.2016 AT 500962016
(71) Anmelder: Götschl, Franz, 1150 Wien (AT); Sparowitz, Lutz, 8561 Söding (AT)
(72) Erfinder: Götschl, Franz, 1150 Wien (AT); Sparowitz, Lutz, 8561 Söding (AT)
(74) Vertreter: Sonn & Partner Patentanwälte

(57) **Zusammenfassung**

Verfahren zur Herstellung eines Betonbaustoffes, insbesondere eines Faserbetons, besonders bevorzugt eines Ultra-Hochleistungs-Faserbetons, für eine Baustelle mit den Schritten:
- Abfüllen einer Grobkorn-Schüttgutmischung in einen Grobkorn-Schüttgutbehälter (6);
- Abfüllen einer Feinkorn-Schüttgutmischung in einen Feinkorn-Schüttgutbehälter (7), wobei die Feinkorn-Schüttgutmischung ein Bindemittel aufweist;
- Verarbeiten der Grobkorn-Schüttgutmischung und der Feinkorn-Schüttgutmischung unter Zugabe von Wasser zu dem Betonbaustoff.

## Beschreibung

Die Erfindung betrifft ein Verfahren zur Herstellung eines Betonbaustoffes, insbesondere eines Faserbetons, besonders bevorzugt eines Ultra-Hochleistungs-Faserbetons, für eine Baustelle.

Im Bauwesen werden je nach Einsatzzweck unterschiedliche Betone verwendet.

Bei sogenanntem Liefer- oder Transportbeton läuft der gesamte Herstellungsprozess in einem Lieferbetonwerk ab. Der Frischbeton wird nach dem Mischvorgang in Fahrmischern oft über relativ weite Strecken zur Baustelle befördert. Weil der chemische Hydratationsprozess schon mit dem Mischen einsetzt, steht für den Transport und Einbau nur ein beschränktes Zeitfenster zur Verfügung.

Andererseits wird auch Baustellenbeton verarbeitet, der direkt auf der Baustelle hergestellt wird. Der Baustellenbeton kann zum Einsatz kommen, wenn die Anfahrtswege von dem stationären Betonwerk zu lang wären. Auch bei Großbaustellen wird mitunter Baustellenbeton eingesetzt.

In der jüngsten Vergangenheit wurden neuartige Betontechnologien entwickelt, für welche sich die vorhandenen Herstellungsprozesse als wenig vorteilhaft herausgestellt haben. Davon betroffen ist insbesondere Faserbeton, welcher in Form des Ultra-Hochleistungs-Faserbetons (englisch "Ultra High Performance Fibre Reinforced Concrete", kurz UHPC) ein High-End-Produkt der aktuellen Betontechnologie darstellt. UHPC ist ein zukunftsweisendes Material, das sich insbesondere durch die folgenden Eigenschaften auszeichnet:
- UHPC kann selbstverdichtend und fließfähig hergestellt werden. Dadurch kann UPHC in sehr enge Formen gegossen werden.
- UHPC ist im Wesentlichen dicht gegen eindringende Flüssigkeiten und Gase.
- UHPC verfügt über eine sehr hohe mechanische Widerstandsfähigkeit, insbesondere hinsichtlich Druckfestigkeit, Verbundfestigkeit und Abriebfestigkeit.
- UHPC ist besonders widerstandsfähig gegen chemische Einwirkungen wie Chlorid (in Form von Streusalz, Meerwasser etc.).
- Die Dauerhaftigkeit von UHPC ist sehr hoch, vergleichbar mit Granit.
- Die erzielbare Nutzungsdauer von UHPC-Tragwerken ist wesentlich länger als bei vergleichbaren Tragwerken aus Normalbeton oder Stahl.
- Wenn UHPC auf bestehende Betonkonstruktionen aufgebracht wird, kann eine kraftschlüssige Verbindung mit dem Untergrund erzielt werden. Der resultierende Betonkörper ist ähnlich stabil wie bei einer Fertigung in einem Guss.

Den herausragenden mechanischen Eigenschaften von UPHC steht jedoch dessen vergleichsweise komplizierte Handhabung gegenüber, welche mit den vorhandenen Herstellungsprozessen nicht ausreichend berücksichtigt wird. Einerseits ist die Verwendung von UHPC als Liefer- bzw. Transportbeton nicht wünschenswert, da die gewünschten Eigenschaften des UHPC über die Lieferstrecke nicht in allen Fällen zuverlässig gewährleistet werden können.

Andererseits sind Trockenmischungen verfügbar, welche unter Zugabe von Wasser direkt auf der Baustelle zu Faserbeton verarbeitet werden können. Nachteilig sind jedoch die hohen Kosten dieser Fertigmischungen, welche dazu beigetragen haben, dass UHPC bisher nur in geringem Umfang eingesetzt wird.

Die JP 2006249855 A offenbart einen Containersack zur Aufbewahrung von Betonkomponenten. Im unteren Bereich des Containersackes wird eine Gesteinskörnung vorgesehen. Im oberen Bereich des Containersackes wird ein mit Zement befüllter Sack angeordnet. Mit einer Öffnungs- und Schließvorrichtung an der Unterseite des Behälters kann der Sack entleert werden. Demnach werden bei diesem Stand der Technik lediglich die Gesteinskörnung einerseits und der Zement andererseits getrennt voneinander, aber in demselben Sack transportiert.

Die JP 2008302958 A beschreibt einen Sack zur Aufbewahrung von Komponenten zur Herstellung von Beton. Der Sack ist in der Art eines Bigbags ausgebildet. An der Unterseite weist der Sack einen faltbaren Entleerungszylinder auf, durch welchen im geöffneten Zustand das Schüttgut aus dem Behälter auslaufen kann. Der Verschluss des Entleerungszylinders bzw. des Bigbags erfolgt über eine Abdeckung, die im Wesentlichen aus vier trapezförmigen Teilen besteht. Mit einem Seil kann der Entleerungszylinder geöffnet, mit einem weiteren Seil kann der Entleerungszylinder geschlossen werden.

Die DE 27 29 597 A1 zeigt ein andersartiges Verfahren zum Bereitstellen von Beton. In einer Lieferstation wird Schüttgut in Behälter gefüllt, welche zwei Kammern aufweisen. Die Menge und Art des Schüttguts wird durch die benötige Betonzusammensetzung bzw. Qualität vorgegeben. Die befüllten Behälter werden zur Weiterverarbeitung mit einem Lastwagen zu einer Baustelle transportiert, wo sie mit Hilfe eines Krans über einem Betonmischer positioniert und anschließend entleert werden. Nach Zugabe von Wasser aus einem Wassertank kann der Beton hergestellt werden. Der Betonmischer und der Wassertank können sich auf einem weiteren Lastwagen befinden. Zusätzlich sind ein Generator zur Energieversorgung und ein Hydraulikkran am Lastwagen. Ferner kann eine Betonpumpe vorgesehen sein, mit welcher der Beton über entsprechende Leitungen an die gewünschte Position gepumpt werden kann.

Die Aufgabe der vorliegenden Erfindung besteht darin, die Nachteile des Standes der Technik zu lindern bzw. zu beheben. Die Erfindung setzt sich daher insbesondere zum Ziel, ein Verfahren anzugeben, mit welchem eine wirtschaftliche Herstellung von Betonbaustoffen unter kontrollierten Bedingungen ermöglicht wird.

Diese Aufgabe wird durch ein Verfahren gemäß Anspruch 1, einen Grobkorn-Schüttgutbehälter gemäß Anspruch 11, einen Feinkorn-Schüttgutbehälter gemäß Anspruch 12 und ein Transport- und Mischfahrzeug gemäß Anspruch 13 gelöst. Bevorzugte Ausführungsformen der Erfindung sind in den abhängigen Ansprüchen angegeben.

Das erfindungsgemäße Verfahren weist demnach zumindest die folgenden Schritte auf:
- Abfüllen einer Grobkorn-Schüttgutmischung in einen Grobkorn-Schüttgutbehälter;
- Abfüllen einer Feinkorn-Schüttgutmischung in einen Feinkorn-Schüttgutbehälter;
- Verarbeiten der Grobkorn-Schüttgutmischung und der Feinkorn-Schüttgutmischung unter Zugabe von Wasser zu dem Betonbaustoff.

Die Erfindung beruht auf der überraschenden Erkenntnis, dass die Aufteilung der trockenen Ausgangsstoffe für den Betonbaustoff in eine Grobkorn-Schüttgutmischung und eine Feinkorn-Schüttgutmischung insbesondere eine vorteilhafte Reduktion des Trocknungsaufwands bewirkt. Die Grobkorn-Schüttgutmischung wird in den Grobkorn-Schüttgutbehälter, die Feinkorn-Schüttgutmischung in den hiervon getrennten Feinkorn-Schüttgutbehälter abgefüllt. Somit können die Grobkorn-Schüttgutmischung und die Feinkorn-Schüttgutmischung im voneinander getrennten Zustand transportiert werden. Die Grobkorn-Schüttgutmischung weist eine größere durchschnittliche Korngröße als die Feinkorn-Schüttgutmischung auf. Der Vorteil dieser Ausführung liegt insbesondere darin, dass an die Feinkorn-Schüttgutmischung höhere Anforderungen an deren Trocknungsgrad gestellt werden. Dies gilt insbesondere deshalb, weil die Feinkorn-Schüttgutmischung das Bindemittel aufweist, welches bei der Verarbeitung der trockenen Bestandteile unter Zugabe der flüssigen Bestandteile, insbesondere Wasser, zu dem Betonbaustoff abbindet und die erforderliche Festigkeit entwickelt. Um das teilweise Abbinden des Bindemittels während Lagerung und Transport zu verhindern, ist es wesentlich, die Feinkorn-Schüttgutmischung einschließlich des Bindemittels in einem hochgradig trockenen ("staubtrockenen") Zustand in den Feinkorn-Schüttgutbehälter abzufüllen. Demgegenüber kann die Grobkorn-Schüttgutmischung einen geringeren Trocknungsgrad als die Feinkorn-Schüttgutmischung aufweisen. Insbesondere kann die Grobkorn-Schüttgutmischung frei von Bindemitteln, insbesondere frei von Zement, sein. Im Ergebnis kann daher der Aufwand für die Trocknung der Ausgangsstoffe des Betonbaustoffes wesentlich reduziert werden. Die Grobkorn-Schüttgutmischung und die Feinkorn-Schüttgutmischung können kurz vor der geplanten Verwendung zu dem Betonbaustoff verarbeitet werden, indem die flüssigen Bestandteile, insbesondere Wasser, zugegeben werden.

Gemäß einer bevorzugten Ausführungsform erfolgt das Verarbeiten der Grobkorn-Schüttgutmischung und der Feinkorn-Schüttgutmischung unter Zugabe von Wasser zu dem Betonbaustoff in drei jeweils zeitlich aufeinanderfolgenden Phasen:
- zunächst wird das Wasser mit zumindest einer weiteren flüssigen Beigabe, insbesondere mit einem flüssigen Fließmittel und/oder mit einem Nanosilica und/oder mit einem Abbindebeschleuniger und/oder mit einem Abbindeverzögerer, miteinander zu einem flüssigen Gemisch verarbeitet;
- danach wird die Feinkorn-Schüttgutmischung von dem Feinkorn-Schüttgutbehälter in das flüssige Gemisch eingebracht und zu einer Suspension dispergiert;
- danach wird die Grobkorn-Schüttgutmischung aus dem Grobkorn-Schüttgutbehälter in die Suspension gegeben.

Bei dieser Vorgehensweise kann überraschenderweise eine besonders gute Konsistenz, insbesondere bei einem UHPC, erreicht werden.

Gemäß einer besonders bevorzugten Ausführungsform wird die Feinkorn-Schüttgutmischung von dem Feinkorn-Schüttgutbehälter auf die Oberfläche des Wassers, welches insbesondere in Form des flüssigen Gemisches vorliegt, abgegeben, wobei sich das Wasser währenddessen in Bewegung befindet. Die Feinkorn-Schüttgutmischung wird bevorzugt in einen Mischer aufgegeben, welcher zuvor mit dem Wasser bzw. mit dem flüssigen Gemisch befüllt worden ist. Der Mischer weist zumindest ein Mischwerk auf, um das Wasser bzw. das flüssige Gemisch während der Aufnahme der Feinkorn-Schüttgutmischung in Bewegung zu halten. Vorzugsweise wird die Feinkorn-Schüttgutmischung (bezogen auf die Betriebsstellung des Mischers) von oben auf die Oberseite des Wassers bzw. des flüssigen Gemischs gestreut.

Besonders bevorzugt ist weiters, wenn die Grobkorn-Schüttgutmischung von dem Grobkorn-Schüttgutbehälter auf die Oberfläche der Suspension aus Wasser (gegebenenfalls mit den weiteren flüssigen Beigaben) und Feinkorn-Schüttgutmischung abgegeben wird, wobei sich die Suspension währenddessen in Bewegung befindet. Bevorzugt wird auch die Bewegung der Suspension über das Mischwerk des Mischers bewerkstelligt, während die Grobkorn-Schüttgutmischung (vorzugsweise von oben, bezogen auf die Betriebsstellung des Mischers) auf die Oberfläche der Suspension abgegeben wird.

Dadurch wird beim Mischen vorteilhafterweise nur sehr wenig Luft in das Mischgut eingebracht. Weiters wird für eine homogene Durchmischung, insbesondere bei einem UHPC, gesorgt.

In einer bevorzugten Ausführungsform weist das Mischwerk des Mischers ein Rührwerk mit einer rotierbaren Welle auf, an der Mischelemente ("Paddel") angebracht sind. Vorzugsweise ist die rotierbare Welle des Rührwerks mit einer Exzentervorrichtung verbunden, so dass sich die Welle mit den Mischelementen einerseits um die eigene Achse drehen und andererseits eine kreisförmige Bewegung um eine stationäre Achse des Rührwerks, insbesondere dessen Mittelachse, durchführen kann. Die Mischelemente des Rührwerks können derart schräggestellt sein, dass sich eine Vorwärtsbewegung des Mischgutes (d.h. eine horizontale Bewegung, bezogen auf den Betriebszustand des Mischers) in dem Rührwerk einstellen kann.

Darüber hinaus weist das Mischwerk des Mischers bevorzugt ein Dispergierwerk auf, welches mit dem Rührwerk verbunden ist. Damit soll die Feinstoff-Schüttgutmischung kolloidal aufgeschlossen werden, um eine Klumpenbildung im Gemisch zu verhindern.

In einer bevorzugten Ausführungsform weist das Dispergierwerk weitere Mischelemente ("Paddel") auf, welche an einem Wellenelement drehbar gelagert sind. Bevorzugt sind die weiteren Mischelemente jeweils mit Durchtrittsöffnungen ausgebildet, wodurch in dem Dispergierwerk eine turbulente Strömung mit Kavitationserscheinungen erzeugt werden kann.

Gemäß einer besonders bevorzugten Ausführungsform wird die Oberfläche des Wassers (bzw. des flüssigen Gemisches) bei der Abgabe der Feinkorn-Schüttgutmischung und/oder die Oberfläche der Suspension bei der Abgabe der Grobkorn-Schüttgutmischung mit einem Ultraschall bestrahlt und/oder mittels eines Rüttlers zum Vibrieren gebracht. Dadurch wird das Einsickern der Feinkorn- bzw. Grobkornpartikel in das Mischgut erleichtert, indem die Oberflächenspannung der Flüssigkeit bzw. der Suspension überwunden wird.

Gemäß einer bevorzugten Ausführung erfolgt das Verarbeiten der Grobkorn-Schüttgutmischung und der Feinkorn-Schüttgutmischung zu dem Betonbaustoff auf der Baustelle. Bei dieser Ausführungsform wird ein Baustellenbeton bzw. Ortbeton zur Verfügung gestellt. Demnach werden die Grobkorn-Schüttgutmischung und die Feinkorn-Schüttgutmischung in unmittelbarer räumlicher Umgebung des Einsatzortes verarbeitet, an dem der Betonbaustoff zur Errichtung oder Sanierung eines Bauwerkes verwendet werden soll. Zu diesem Zweck werden die Grobkorn-Schüttgutmischung und die Feinkorn-Schüttgutmischung unter Zugabe flüssiger Bestandteile, vor allem Wasser, miteinander vermischt. Durch die Verarbeitung auf der Baustelle können die gewünschten Eigenschaften des Betonbaustoffs präzise eingehalten werden. Beeinträchtigungen der Betoneigenschaften (Stichwort: Elefantenhautbildung) durch chemische Prozesse während des Transports können zuverlässig vermieden werden.

Gemäß einer weiteren bevorzugten Ausführung wird das Abfüllen der Grobkorn-Schüttgutmischung in den Grobkorn-Schüttgutbehälter und/oder das Abfüllen der Feinkorn-Schüttgutmischung in den Feinkorn-Schüttgutbehälter in einem Werk vorgenommen. Diese Ausführung bringt insbesondere den Vorteil mit sich, dass die Abmischung der trockenen Bestandteile des Betonbaustoffes unter präzise kontrollierbaren Bedingungen in dem Werk erfolgt. Die Grobkorn-Schüttgutmischung und die Feinkorn-Schüttgutmischung werden voneinander getrennt zur Baustelle geliefert und dort zu dem Betonbaustoff verarbeitet. Vor allem bei UHPC ist spezialisiertes Personal erforderlich, um die gewünschten Schüttgutmischungen zu erzeugen. Vorteilhafterweise ist bei dieser Ausführung spezialisiertes Personal lediglich in dem Werk erforderlich, wohingegen die Verarbeitung der trockenen Schüttgutmischungen auf der Baustelle keine besonderen Kenntnisse verlangt.

Gemäß einer weiteren bevorzugten Ausführung weist die Grobkorn-Schüttgutmischung einen Anteil von mehr als 60 Massenprozent, bevorzugt von mehr als 75 Massenprozent, besonders bevorzugt von mehr als 90 Massenprozent, insbesondere von mehr als 99 Massenprozent, einer Gesteinskörnung mit Korngrößen von mehr als im Wesentlichen 0,05 mm, besonders bevorzugt von mehr als im Wesentlichen 0,06 mm auf. Demnach besteht die Grobkorn-Schüttgutmischung zu mehr als 60 Massenprozent, bevorzugt jedoch zu einem wesentlich höheren Anteil, aus einer Gesteinskörnung, deren Korngrößen durchwegs größer als im Wesentlichen 0,06 mm, insbesondere größer als 0,125 mm, sind. Die Grobkorn-Schüttgutmischung kann jedoch vergleichsweise geringe Anteile von Bestandteilen haben, welche eine Korngröße unter den genannten Grenzwerten aufweisen.

Für die Zwecke dieser Offenbarung wird als Korngröße der Äquivalentdurchmesser, d.h. der entsprechende Durchmesser einer perfekten Kugel, verstanden. Der Äquivalentdurchmesser wird insbesondere als Siebdurchmesser ermittelt.

Besonders bevorzugt sind die Korngrößen der Gesteinskörnung der Grobkorn-Schüttgutmischung kleiner als im Wesentlichen 10 mm, besonders bevorzugt kleiner als 9 mm, insbesondere kleiner als im Wesentlichen 8 mm. Weiters ist vorteilhaft, wenn die Gesteinskörnung eine Korngrößenverteilung aufweist, d.h. entlang einer Sieblinie abgemischt wird. Dadurch kann insbesondere eine optimale Verdichtung des Betonbaustoffes gewährleistet werden.

Das erfindungsgemäße Verfahren kann mit besonderen Vorteilen bei der Herstellung von Faserbeton, insbesondere UHPC, genutzt werden. Bei dieser Ausführungsvariante weist enthält die Grobkorn-Schüttgutmischung Fasern, insbesondere Stahlfasern. Beim Stand der Technik werden die Fasern erst gegen Ende des Mischprozesses dem Frischbeton in einem Mischer zugeführt. Danach muss noch so lange gemischt werden, bis die Fasern im Beton gleichmäßig verteilt sind. Bei der zuvor beschriebenen Ausführungsvariante können die Fasern bereits während des Zusammenmischens der Grobkorn-Schüttgutmischung, welche bevorzugt in dem zentralen Werk durchgeführt wird, mit den Gesteinskörnungen gut vermischt bzw. homogenisiert werden. Dadurch entfällt dieser heikle Mischvorgang auf der Baustelle.

Als Fasern sind bevorzugt Stahlfasern vorgesehen. Der Vorteil von Stahlfasern liegt insbesondere darin, dass Stahl vor dem Zugversagen ein ausgeprägtes Fließvermögen zeigt. Dadurch können die Stahlfasern schräg über Risse hinweg Zugkräfte übertragen, indem eine plastische Verformung stattfindet.

Gemäß einer weiteren bevorzugten Ausführung weist die Feinkorn-Schüttgutmischung einen Anteil von mehr als 60 Massenprozent, bevorzugt von mehr als 75 Massenprozent, besonders bevorzugt von mehr als 90 Massenprozent, insbesondere von mehr als 99 Massenprozent, eines Feinkorngemischs mit Korngrößen von kleiner als im Wesentlichen 0,15 mm, insbesondere kleiner als im Wesentlichen 0,125 mm, auf. Demnach besteht die Feinkorn-Schüttgutmischung zu mehr als 60 Massenprozent, bevorzugt jedoch zu einem wesentlich höheren Anteil, aus einem Feinkorngemisch, dessen Korngrößen durchwegs kleiner als im Wesentlichen 0,15 mm, bevorzugt jedoch kleiner als im Wesentlichen 0,125 mm, sind. Die Feinkorn-Schüttgutmischung kann jedoch vergleichsweise geringe Anteile von Bestandteilen haben, welche eine Korngröße oberhalb der genannten Grenzwerte aufweisen.

Das Feinkorngemisch weist bevorzugt ein Gesteinsmehl auf. Weiters ist vorteilhaft, wenn das Feinkorngemisch eine Korngrößenverteilung aufweist, d.h. entlang einer Sieblinie abgemischt wird, wodurch die vorteilhaften Eigenschaften insbesondere von UHPC optimal ausgenutzt werden können.

Die Vorteile des erfindungsgemäßen Verfahrens können insbesondere dadurch genutzt werden, dass das Bindemittel Zement, insbesondere zudem Mikrosilika und/oder Nanosilika, aufweist. Demnach werden die Feinkorn-Bestandteile des Betonbaustoffes in der Feinkorn-Schüttgutmischung zusammengefasst, welche in den eigenen, d.h. vom Grobkorn-Schüttgutbehälter vollständig getrennten, Feinkorn-Schüttgutbehälter abgefüllt wird. Durch die Auftrennung der festen Inhaltsstoffe des Betonbaustoffes anhand deren Korngröße lässt sich der Energieaufwand bei der Herstellung des Betonbaustoffes erheblich reduzieren, da nur die Bestandteile der Feinkorn-Schüttgutmischung einschließlich des Bindemittels einer Intensivtrocknung unterzogen werden, wohingegen die Grobkorn-Schüttgutmischung mit einer gewissen Restfeuchte in den Grobkorn-Schüttgutbehälter abgefüllt werden können. Diese Restfeuchte kann bereits im jeweiligen Vorratsbehälter gemessen und bei der Dosierung des Wassers auf der Baustelle berücksichtigt werden.

Weiters ist es von Vorteil, wenn das Feinkorngemisch ein Fließmittel im trockenen Zustand und/oder ein Verzögerungsmittel im trockenen Zustand und/oder einen Entschäumer im trockenen Zustand enthält. Im Fall eines UHPC soll der Wasseranteil möglichst auf das chemisch erforderliche Mindestmaß beschränkt werden. Deshalb ist ein im Stand der Technik bekanntes Hochleistungsfließmittel (engl. Superplasticizer) erforderlich, um den Frischbeton verarbeitbar, d.h. ausreichend flüssig, zu machen. Durch ebenfalls an sich bekannte Abbinde-Verzögerungsmittel wird die Zeitspanne verlängert, innerhalb der der Beton eingebaut sein muss. Wenn der Beton nahe der Einbaustelle fertiggestellt wird, ist in der Regel ein Verzögerungsmittel nicht erforderlich. In solchen Fällen kann es sogar sinnvoll sein, ein Abbinde-Beschleunigungsmittel einzusetzen, beispielsweise, wenn der junge Beton schon frühzeitig belastet werden soll. Mit Hilfe bekannter Entschäumer kann die Schaumbildung an der Betonoberfläche reduziert werden.

Bei dem oben beschriebenen Verfahren kann ein Grobkorn-Schüttgutbehälter, insbesondere Bigbag, verwendet werden, der mit einer Grobkorn-Schüttgutmischung befüllt ist, welche einen Anteil von mehr als 60 Massenprozent, bevorzugt von mehr als 75 Massenprozent, besonders bevorzugt von mehr als 90 Massenprozent, insbesondere von mehr als 99 Massenprozent, einer Gesteinskörnung mit Korngrößen von mehr als im Wesentlichen 0,04 mm, bevorzugt von mehr als im Wesentlichen 0,05 mm, besonders bevorzugt von mehr als im Wesentlichen 0,06 mm, aufweist.

Weiters kann bei dem erfindungsgemäßen Verfahren ein Feinkorn-Schüttgutbehälter, insbesondere Bigbag, verwendet werden, der mit einer Feinkorn-Schüttgutmischung befüllt ist, welche einen Anteil von mehr als 60 Massenprozent, bevorzugt von mehr als 75 Massenprozent, besonders bevorzugt von mehr als 90 Massenprozent, insbesondere von mehr als 99 Massenprozent, eines Feinkorngemischs mit Korngrößen von kleiner im Wesentlichen 0,2 mm, bevorzugt kleiner im Wesentlichen 0,15 mm, insbesondere kleiner im Wesentlichen 0,125 mm, aufweist.

Gemäß einer besonders bevorzugten Ausführung weist der gemäß vorstehendem Verfahren hergestellte Betonbaustoff als Frischbeton, d.h. vor dem Erhärten, die folgenden Komponenten auf.

**Grobkorn-Schüttgutmischung:**

| Komponente | Korngröße[Mikrometer] | Massenanteil [Kilogramm / Kubikmeter Frischbeton] |
|---|---|---|
| Quarzsand | 60 bis 250 | 0 bis 400 |
| Quarzsand | 200 bis 1000 | 300 bis 1000 |
| Basaltsplit/Diabas | 1500 bis 4500 | 0 bis 1000 |
| Fasern | | 0 bis 200 |

**Feinkorn-Schüttgutmischung**

| Komponente | Korngröße[Mikrometer] | Massenanteil [Kilogramm / Kubikmeter Frischbeton] |
|---|---|---|
| Quarzmehl | 0.3 bis 100 | 120 bis 320 |
| Mikrosilika staubförmig | 0.03 bis 2 | 60 bis 160 |
| Zement | 0.2 bis 125 | 600 bis 800 |

**Flüssige Bestandteile**

| Komponente | Massenanteil [Kilogramm / Kubikmeter Frischbeton] |
|---|---|
| Wasser | 140 bis 210 |
| Fließmittel | 12 bis 35 |
| Verzögerer flüssig | 0 bis 3 |
| Entschäumer flüssig | 0 bis 3 |

Die Verarbeitung der Grobkorn-Schüttgutmischung und der Feinkorn-Schüttgutmischung zu dem Betonbaustoff kann bevorzugt in einem Transport- und Mischfahrzeug vorgenommen werden, mit einer Lagereinrichtung für Feinkorn-Schüttgutbehälter und für Grobkorn-Schüttgutbehälter, mit einer Mischeinrichtung zum Verarbeiten der Grobkorn-Schüttgutmischung und der Feinkorn-Schüttgutmischung zu dem Betonbaustoff.

Die Verarbeitung der Grobkorn-Schüttgutmischung und der Feinkorn-Schüttgutmischung in dem Transport- und Mischfahrzeug kann wesentlich vereinfacht werden, wenn eine Fördereinrichtung, insbesondere eine Laufkatzeneinheit, zum Fördern des Grobkorn-Schüttgutbehälters und/oder des Feinkorn-Schüttgutbehälters von der Lagereinrichtung zu der Mischeinrichtung vorgesehen ist. Bevorzugt weist die Laufkatzeneinheit eine insbesondere im Wesentlichen in Längsrichtung des Transport- und Mischfahrzeugs erstreckte Führungsschiene auf, entlang welcher eine Laufkatze samt Grobkorn-Schüttgutbehälter und/oder Feinkorn-Schüttgutbehälter beweglich ist. Bevorzugt sind zwei Laufkatzeneinheiten, je eine Laufkatzeneinheit für den Längstransport der Grobkorn-Schüttgutmischung und eine Laufkatzeneinheit für den Längstransport der Feinkorn-Schüttgutmischung, vorgesehen.

Gemäß einer weiteren bevorzugten Ausführung weist die Mischeinrichtung einen Planetenmischer auf. Derartige Planetenmischer sind im Stand der Technik (vgl. z.B. DE 10 2012/210558 A1) für sich genommen hinlänglich bekannt, so dass sich nähere Ausführungen hierzu erübrigen können. Bei dem Planetenmischer laufen bevorzugt Mischelemente in Form einer Zentrumsdrehung um eine zentrale Rotationsache und einer Planetendrehung um eine Planetenrotationsachse um. Die Winkelgeschwindigkeiten der beiden Teildrehungen, die die Zykloide, genauer die epizykloide Bahn der Mischelemente definieren, sind dabei konstant, so dass auch die Bahngeschwindigkeit der Mischelemente konstant ist.

Gemäß einer weiteren bevorzugten Ausführung weist die Mischeinrichtung einen Kolloidalmischer auf. Ein solcher Kolloidalmischer wird beispielsweise in der DE 20 2010 003100 U1 beschrieben. Der Kolloidalmischer weist bevorzugt einen Mischtrog auf, in dem eine Vormischzone und darunter eine Dispergierzone gebildet sind. In der Vormischzone ist bei dieser Ausführung eine Vormischeinrichtung zum Einmischen von Feststoff vorgesehen, und in der Dispergierzone eine Dispergiereinrichtung für einen kolloidalen Aufschluss.

Gemäß einer besonders bevorzugten Ausführung werden zunächst in den Kolloidalmischer die flüssigen Bestandteile, insbesondere Wasser, und danach die Feinkorn-Schüttgutmischung zugegeben und zu einer Suspension homogenisiert. Die Feinkorn-Schüttgutmischung kann bereits das Fließmittel im trockenen Zustand enthalten, wodurch die Verarbeitung am Einsatzort weiter vereinfacht wird. Das Fließmittel kann jedoch alternativ als flüssiger Bestandteil zugegeben werden, wofür vor Ort eine Dosiereinrichtung vorhanden sein muss, wodurch zwar die Verarbeitung kompliziert wird, jedoch eine höhere Flexibilität hinsichtlich der Rezepturen erzielt wird. Anschließend wird die Suspension in eine zweite Mischeinheit, insbesondere einen Planetenmischer, geleitet und dort mit der Grobkorn-Schüttgutmischung vermischt. Vorteilhafterweise können der Kolloidalmischer und der Planetenmischer zeitparallel arbeiten.

In einer alternativen Ausführungsform wird der Kolloidalmischer weggelassen, wobei zuerst das Wasser mit der Feinkorn-Schüttgutmischung und anschließend die Grobkorn-Schüttgutmischung in den Planetenmischer eingebracht wird.

Zur autarken Verarbeitung der Ausgangsprodukte in den Betonbaustoff ist es günstig, wenn das Transport- und Mischfahrzeug einen Wassertank und gegebenenfalls zumindest einen Behälter für zumindest eine flüssige Zugabe, insbesondere ein Fließmittel, aufweist.

Weiters ist bevorzugt zumindest eine Dosiereinheit zur Dosierung von Wasser aus dem Wassertank und gegebenenfalls von flüssiger Zugabe aus dem Behälter in die Mischeinrichtung vorgesehen.

Bei einer bevorzugten Ausführungsform wird ein Feinkorn-UHPC als Betonwerkstoff hergestellt. Die verschiedenen Komponenten, aus denen sich die Rezeptur des Feinkorn-UHPCs zusammensetzt, lassen sich in die folgenden drei Gruppen einteilen.
1. Flüssige Zugaben (Kurzbezeichnung: Flüssigstoffe) Sie enthalten alle flüssigen Bestandteile, wie das Wasser, das (Hochleistungs-)Fließmittel, sowie eventuell weitere Flüssigkeiten, mit Nanosilica, Abbindebeschleunigern, Abbindeverzögerern etc.
2. Feinkörnige Zugaben (Kurzbezeichnung: Feinstoffe) Dazu gehören alle trockenen Mehlkornkomponenten, beispielsweise (feingemahlener) Zement, reaktive Zusatzstoffe (Mikrosilica, Metacaolin, Flugasche etc.) und inerte Zusatzstoffe (wie Quarzpulver, Kalksteinpulver, etc.) mit einer Partikelgröße kleiner oder gleich 0.125 mm.
3. Grobkörnige Zugaben und Fasern (Kurzbezeichnung: Grobstoffe) Die Gesteinkörnungen zwischen 0.125 mm und 4 mm (oder 8 mm) werden als Grobstoffe bezeichnet. Es handelt sich dabei insbesondere um Quarzsand und Basaltsplitt. Zu diesen Grobstoffen kommen noch die Fasern hinzu. Kunststofffasern verbessern den Brandwiderstand des UHPCs. Stahlfasern sind statisch wirksam. Sie sind in ihrer Tragwirkung mit einer konventionellen Mindestbewehrung vergleichbar. Innerhalb des UHPCs sind die Stahlfasern sicher und nachhaltig vor Korrosion geschützt und deshalb ist dieser Aspekt in Hinblick auf die Tragfähigkeit und Dauerhaftigkeit unbedenklich. An der Betonoberfläche entstehen allerdings oft unschöne kleine Rostflecken. Der Vorteil von Stahlfasern liegt vor allem in ihrer ausgeprägten plastischen Verformbarkeit. Diese wird benötigt, weil die Fasern oft schräg zur Rissöffnung liegen. Alternative Fasern, wie Kohlefasern oder Gesteinsfasern, werden deshalb, aber auch aus Kostengründen, bislang noch wenig in der Praxis eingesetzt, können aber im Rahmen der Erfindung ebenfalls verwendet werden.

In einer bevorzugten Ausführungsform erfolgt der Mischprozess bei der Herstellung eines UPHC-Betonbaustoffes in drei nacheinander ablaufenden Phasen.

### Phase 1 (Flüssigphase)

Zuerst werden die Flüssigkeiten (Wasser, flüssige Beigaben) in einen leeren Mischer dosiert und dort miteinander vermischt.

### Phase 2 (Feinstoffphase)

Danach werden die Feinstoffe aus dem Feinstoff-Big-Bag sukzessive in die Flüssigkeit eingestreut. Die Eingabegeschwindigkeit und -menge der Feststoffe wird mit der Fließgeschwindigkeit und Menge des Mischgutes so abgestimmt, dass keine nennenswerte Agglomeration der Feinstoffe auftritt. Gleichzeitig wird mit Hilfe des Mischers ein kolloidaler Aufschluss des Bindemittels (Zement) und die agglomeratfreie Dispergierung aller flüssigen und pulverförmigen Bestandteile des Mischgutes erreicht. Am Ende der Phase 2 ist das Mischgut zu einer selbstfließenden und homogenen Suspension aufgeschlossen.

### Phase 3 (Grobstoffphase)

Nun folgt die sukzessive Zugabe der Grobstoffe in die Suspension, wiederum mengenmäßig abgestimmt auf das fließende Mischgut im Mischer. Weil das Dispergieren bereits in der Phase 2 abgeschlossen wurde, geht es in der Phase 3 nur mehr darum, die Grobstoffe bestmöglich in die Suspension einzumischen. Hierfür weist der Mischer ein Rührwerk auf, welches möglichst wenig Luft in das Mischgut einbringt. Mit dem Abschluss der Phase 3 ist die aktuelle Misch-Charge fertig gestellt. Die Länge der Mischtrommel wird bevorzugt auf die erforderliche Mischdauer für die Herstellung der Suspension abgestimmt. Der auf diese Weise hergestellte UHPC ist in hohem Ausmaß aufgeschlossen und homogen. Allfällige Fasern sind gleichmäßig im Mischgut verteilt und der Luftporengehalt ist minimiert. Die oben beschriebene Vorgehensweise liefert nach relativ kurzer Mischzeit und mit vergleichsweise geringem Energieaufwand einen UHPC von gleichbleibend hoher Qualität.

Die Erfindung wird nachstehend anhand von bevorzugten Ausführungsbeispielen, auf die sie nicht beschränkt sein soll, weiter erläutert. In der Zeichnung zeigt:
Fig. 1 ein Funktionsschema eines Werks zur Abfüllung einer Grobkorn-Schüttgutmischung in Grobkorn-Schüttgutbehälter und einer Feinkorn-Schüttgutmischung in Feinkorn-Schüttgutbehälter;
Fig. 2 und Fig. 3 schematische Ansichten eines erfindungsgemäßen Transport- und Mischfahrzeugs, mit welchem die Grobkorn- bzw. Feinkorn-Schüttgutbehälter zu einer Baustelle transportiert und dort der Betonwerkstoff hergestellt wird;
Fig. 4, 5 schematische Ansichten eines Umladevorgangs von reinen Transportfahrzeugen in das erfindungsgemäße Transport- und Mischfahrzeug gemäß Fig. 2, 3;
Fig. 6 schematisch eine Baustelle, auf welcher der Betonbaustoff zum Einsatz kommt;
Fig. 7a, 7b eine Ausführungsform einer mobilen Mischanlage für die Herstellung des Betonwerkstoffs;
Fig. 8a, 8b eine Ausführungsform eines im Stand der Technik bekannten Mischers für die Herstellung eines Betonwerkstoffs (Fig. 8a: Querschnitt; Fig. 8b: Längsschnitt);
Fig. 9a, 9b Funktionsskizzen des Mischers gemäß Fig. 8 (Fig. 9a: Querschnitt; Fig. 9b: Längsschnitt);
Fig. 10a, 10b einen erfindungsgemäßer Mischer für den Betonwerkstoff als Weiterentwicklung der bekannten Ausführung gemäß Fig. 8, 9 (Fig. 10a: Querschnitt; Fig. 10b: Längsschnitt);
Fig. 11a, Fig. 11b Detailansichten des Mischers;
Fig. 12 eine Ansicht eines Rührwerks des Mischers;
Fig. 13 Ansichten des Mischers mit dem Rührwerk gemäß Fig. 12 in verschiedenen Phasen der Betonherstellung;
Fig. 14 eine Ansicht eines Dispergierwerks des erfindungsgemäßen Mischers;
Fig. 15a eine schematische Ansicht eines 0,75 Kubikmeter-Mischers in den drei Phasen der Befüllung;
Fig. 15b eine schematische Ansicht eines 1,5 Kubikmeter-Mischers in den drei Phasen der Befüllung; und
Fig. 16 eine Ansicht einer Einrichtung zum Entleeren und Reinigen des erfindungsgemäßen Mischers.

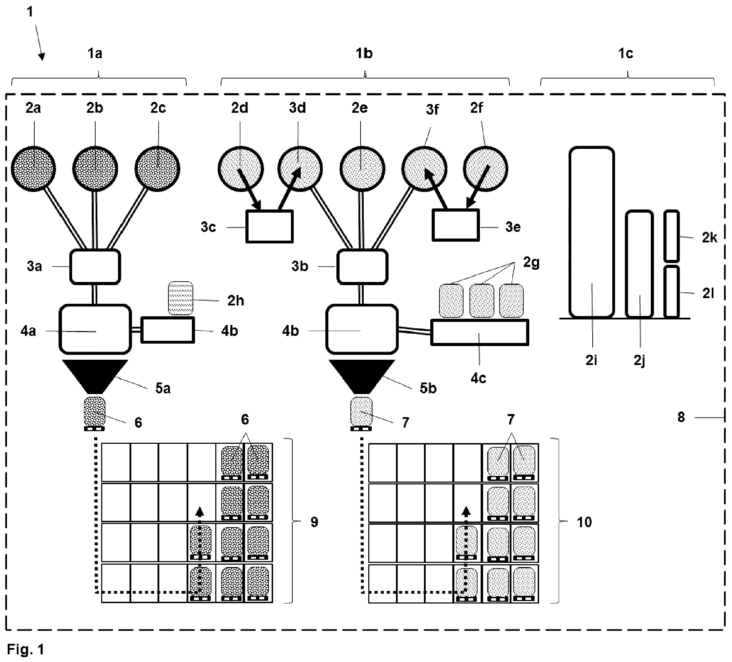

In Fig. 1 ist schematisch eine stationäre Dosier- und Mischanlage, nachfolgend kurz Premix-Anlage oder Werk 1, gezeigt, mit welcher zwei unterschiedliche Schüttgutmischungen für die Herstellung von Faserbeton in eigene Schüttgutbehälter abgefüllt werden.

Wie aus Fig. 1 ersichtlich, weist das Werk 1 (nur schematisch dargestellte) Vorratsbehälter 2a, 2b, 2c, 2d, 2e, 2f, 2g, 2h für die verschiedenen Anteile der Schüttgutmischungen auf. Die Vorratsbehälter 2a, 2b, 2c enthalten Gesteinskörnungen, wobei in dem Vorratsbehälter 2a Quarzsand mit Korngrößen von 60 bis 250 Mikrometer, in dem Vorratsbehälter 2b Quarzsand mit Korngrößen von 200 bis 1000 Mikrometer, in dem Vorratsbehälter 2c Basaltsplit/Diabas mit Korngrößen von 1500 bis 4500 Mikrometer vorgehalten ist. In dem Vorratsbehälter 2d ist Quarzmehl mit Korngrößen von 0,3 bis 100 Mikrometer enthalten. Der Vorratsbehälter 2e beinhaltet staubförmige Mikrosilika. In dem Vorratsbehälter 2f ist ein pulverförmiges Bindemittel, insbesondere Zement, aufgenommen. Optional sind mehrere Vorratsbehälter 2g vorgesehen, welcher Trockenstoff-Chemikalien, wie Fließmittel, Verzögerer und Entschäumer, beinhalten. Weiters ist ein Vorratsbehälter 2h für Stahlfasern vorgesehen. Schließlich können ein Vorratsbehälter 2i für Wasser, ein Vorratsbehälter 2j für flüssiges Fließmittel, ein Vorratsbehälter 2k für einen flüssigen Entschäumer, ein Vorratsbehälter 21 für einen flüssigen Abbindebeschleuniger vorgesehen sein.

In dem dargestellten Werk 1 werden zwei unterschiedliche Schüttgutmischungen hergestellt und in die Schüttgutbehälter 6, 7 abgefüllt. Die Schüttgutbehälter 6, 7 können nacheinander, bevorzugt aber zeitparallel mit unterschiedlichen Inhalten befüllt werden.

Einerseits wird eine Grobkorn-Schüttgutmischung erzeugt, welche die Gesteinskörnung mit Korngrößen insbesondere zwischen 0,06 mm und 4,5 mm und die Kurzfaserbewehrung, vorzugsweise Stahlfasern, enthält. Die verschiedenen Gesteinskörnungen werden nach einer Sieblinie dosiert und trocken mit den Stahlfasern vorgemischt.

Zu diesem Zweck weist das Werk 1 eine Dosiereinrichtung 3a mit einer Waage auf, mit welcher die Ausgangsstoffe aus den Vorratsbehältern 2a, 2b, 2c in den gewünschten Mengen bereitgestellt werden. Die Dosiereinrichtung 3a ist dazu eingerichtet, die Ausgangsstoffe aus den Vorratsbehältern 2a, 2b, 2c entsprechend einer vorgegebenen Sieblinie zu dosieren, um die gewünschte Korngrößenverteilung in der Grobkorn-Schüttgutmischung zu erhalten. Weiters ist schematisch eine Mischvorrichtung 4a ersichtlich, mit welcher die Grobkorn-Schüttgutmischung vorgemischt wird. Der Mischvorrichtung 4a werden zudem, vorzugsweise über eine Faserdosier- und Rüttelmaschine 4b, Stahlfasern von dem Vorratsbehälter 2h zugeführt. Von der Mischvorrichtung 4a gelangt die Schüttgutmischung in eine Abfüllvorrichtung 5a, mit welcher die Grobkorn-Schüttgutmischung in Grobkorn-Schüttgutbehälter 6 abgefüllt wird. Als Grobkorn-Schüttgutbehälter werden insbesondere sogenannte Bigbags (englisch "Flexible Intermediate Bulk Container", kurz FIBC) verwendet.

Andererseits wird eine Feinkorn-Schüttgutmischung erzeugt, welche ein Feinkorngemisch aus staubtrockenen feinen Körnungen mit Korngrößen insbesondere < 0.125 mm enthält. Das Feinkorngemisch beinhaltet Zement, Gesteinsmehle und weitere Zusatzstoffe wie staubförmiges Mikrosilika. Das Feinkorngemisch wird wie die Grobkorn-Schüttgutmischung nach einer Sieblinie dosiert und homogenisiert.

Zu diesem Zweck weist das Werk 1 eine weitere Dosiereinrichtung 3b auf, mit welcher die Ausgangsstoffe in den gewünschten Mengen bereitgestellt werden. Das Quarzmehl aus dem Vorratsbehälter 2d wird, optional über eine Feuertrockenanlage 3c und einen Zwischenspeicher 3d, der weiteren Dosiereinrichtung 3b zugeführt. Dementsprechend wird der Inhalt des Vorratsbehälters 2f, optional über eine Zementkühlanlage 3e und einen Zwischenspeicher 3f, der weiteren Dosiereinrichtung 3b zugeführt. Die weitere Dosiereinrichtung 3b ist zudem mit dem Vorratsbehälter 2e verbunden, welcher die Mikrosilika enthält. Die weitere Dosiereinrichtung 3b ist dazu eingerichtet, die Ausgangsstoffe aus den Vorratsbehältern 2d, 2e, 2f entsprechend einer vorgegebenen Sieblinie zu dosieren, um die gewünschte Korngrößenverteilung in der Feinkorn-Schüttgutmischung zu erhalten. In Fig. 1 ist schematisch eine weitere Mischvorrichtung 4b ersichtlich, mit welcher die Feinkorn-Schüttgutmischung vorgemischt wird. Die weitere Mischvorrichtung 4b ist einerseits mit der weiteren Dosiereinrichtung 3b verbunden. Andererseits kann die weitere Mischvorrichtung 4b, insbesondere über eine Präzisionsdosiereinrichtung 4c für staubförmige chemische Zugaben, mit den Vorratsbehältern 2g verbunden sein. Von der Mischvorrichtung 4b gelangt die Feinkorn-Schüttgutmischung in eine weitere Abfüllvorrichtung 5b, mit welcher die Feinkorn-Schüttgutmischung in Feinkorn-Schüttgutbehälter 7 abgefüllt wird. Als Feinkorn-Schüttgutbehälter 7 werden insbesondere Bigbags verwendet.

In Fig. 1 sind die Anlagenkomponenten für die Herstellung der Grobkorn-Schüttgutmischung mit Pfeil 1a, die Anlagenkomponenten für die Herstellung der Feinkorn-Schüttgutmischung mit Pfeil 1b, die Vorratsbehälter 2i, 2j, 2k, 21 für die flüssigen Betonzugaben mit Pfeil 1c zusammengefasst. Die abgefüllten Grobkorn-Schüttgutbehälter 6 werden in einem ersten Lager 9, die abgefüllten Feinkorn-Schüttgutbehälter in einem zweiten Lager 10 gelagert.

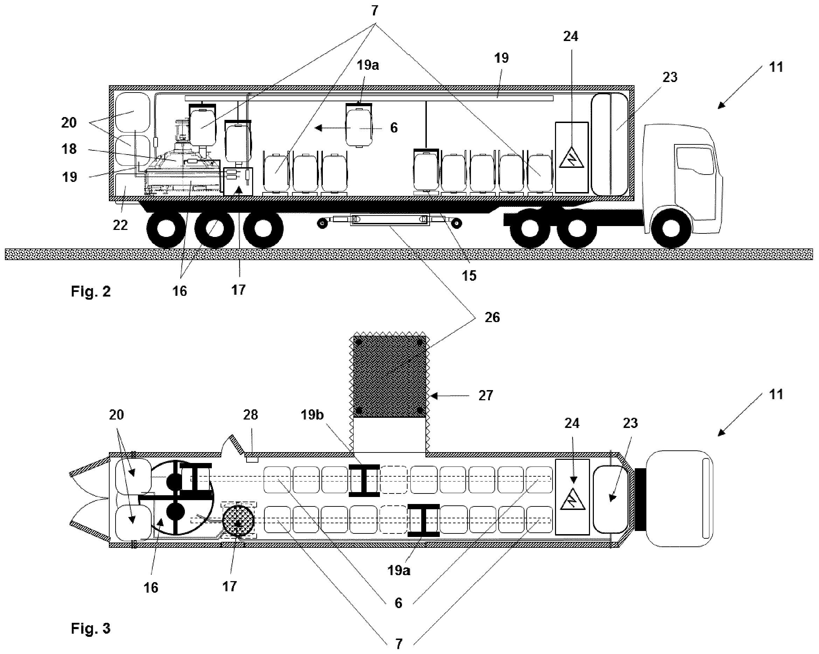

Die befüllten Schüttgutbehälter 6, 7 werden in dem Werk 1 gelagert und mit einem speziellen Transport- und Mischfahrzeug 11 (siehe Fig. 2 bis 4) zu einer Baustelle transportiert. Die Verarbeitung zu dem Betonbaustoff, insbesondere UHPC, erfolgt ebenfalls in dem Transport- und Mischfahrzeug 11.

Das Volumen der Grobkorn-Schüttgutmischung im Grobkorn-Schüttgutbehälter 6 und das Volumen der Feinkorn-Schüttgutmischung im Feinkorn-Schüttgutbehälter 7 sind vorzugsweise so bemessen, dass die Grobkorn-Schüttgutmischung und die Feinkorn-Schüttgutmischung zusammen mit den flüssigen Zugaben den Inhalt eines herkömmlichen Mischers auf der Baustelle füllen. Bei jeder Mischcharge wird der gesamte Inhalt aus zwei Bigbags und die entsprechenden flüssigen Zugaben, wie Wasser, allenfalls Fließmittel etc., miteinander vermischt.

Das Werk 1 kann erforderlichenfalls rund um die Uhr Bigbags produzieren und mehrere Transport- und Mischfahrzeuge 11 mit befüllten Schüttgutbehältern 6, 7 versorgen.

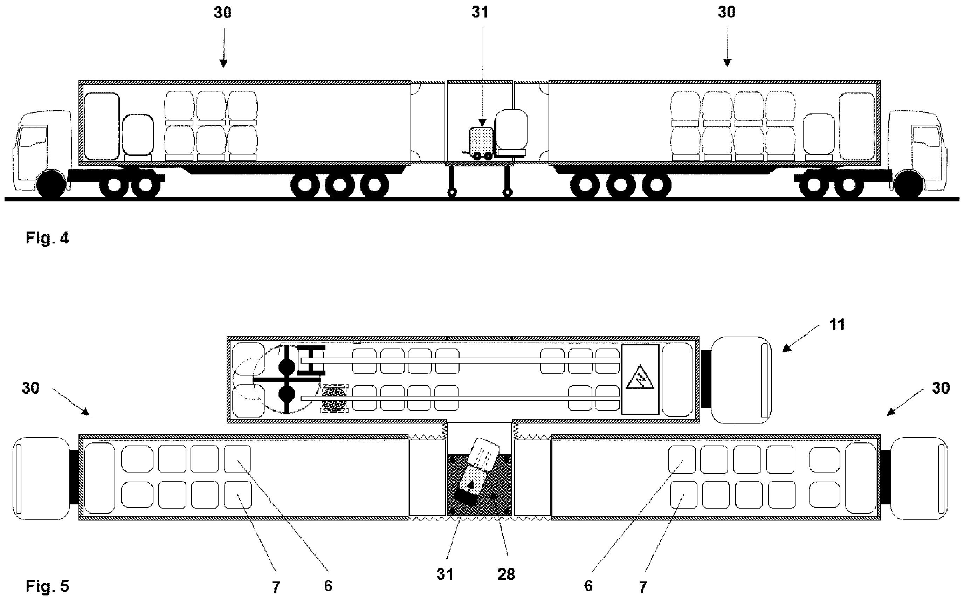

Wenn größere Frischbetonmengen herzustellen sind, können die befüllten Schüttgutbehälter 6, 7 mit Hilfe von klimatisierten Lastkraftwagen 30 zur Baustelle transportiert werden, wo sie unter Verwendung eines Gabelstaplers 31 in das Transport- und Mischfahrzeug 11 umgeladen und darin zur Herstellung des UHPC herangezogen werden (vgl. Fig. 4, 5). Kleinere Kubaturen von beispielsweise kleiner 10 Kubikmetern kann das Transport- und Mischfahrzeug 11 selbst mitführen.

Zur Herstellung eines Betonbaustoffes, insbesondere eines Faserbetons, besonders bevorzugt eines Ultra-Hochleistungs-Faserbetons, für eine Baustelle kann daher ein Verfahren mit zumindest den folgenden Schritten durchgeführt werden:

In einer Premix-Anlage 1
- Bereitstellen einer Grobkorn-Schüttgutmischung;
- Vermischen der Grobkorn-Schüttgutmischung;
- Abfüllen der Grobkorn-Schüttgutmischung in Grobkorn-Schüttgutbehälter 6;
- Lagern der Grobkorn-Schüttgutbehälter 6;
- Bereitstellen einer Feinkorn-Schüttgutmischung;
- Vermischen der Feinkorn-Schüttgutmischung;
- Abfüllen der Feinkorn-Schüttgutmischung in Feinkorn-Schüttgutbehälter 7;
- Lagern der Feinkorn-Schüttgutbehälter 7;
- optional Lagern der flüssigen Betonzugaben (wie Wasser, Fließmittel etc.) in Behältern.
   Entlang einer Transportstrecke zwischen der Premix-Anlage 1 und einer Baustelle
- Transportieren des Grobkorn-Schüttgutbehälters 6 und des Feinkorn-Schüttgutbehälters 7 zu einer Baustelle;
   Auf der Baustelle:
   - Verarbeiten der Grobkorn-Schüttgutmischung und der Feinkorn-Schüttgutmischung unter Zugabe von Wasser, gegebenenfalls weiterer flüssiger Bestandteile, zu dem Betonbaustoff.

In Fig. 2 bis 4 ist das Transport- und Mischfahrzeug 11 schematisch dargestellt, mit welchem die Grobkorn-Schüttgutmischung und die Feinkorn-Schüttgutmischung zu dem Betonbaustoff verarbeitet werden.

Wie aus Fig. 2, 3 ersichtlich, weist das Transport- und Mischfahrzeug 11 eine Lagereinrichtung 15 für Feinkorn-Schüttgutbehälter 7 und Grobkorn-Schüttgutbehälter 6 auf. Weiters ist eine Mischeinrichtung 16 zum Verarbeiten der Grobkorn-Schüttgutmischung und der Feinkorn-Schüttgutmischung zu dem Betonbaustoff vorgesehen. In der gezeigten Ausführung weist die Mischeinrichtung 16 einen Planetenmischer 17 und einen Kolloidalmischer 18 auf. Zudem ist eine Fördereinrichtung 19 in Form von Laufkatzeneinheiten 19a, 19b zum Fördern von Grobkorn-Schüttgutbehältern 6 bzw. Feinkorn-Schüttgutbehältern 7 im vereinzelten Zustand von der Lagereinrichtung 15 zu der Mischeinrichtung 16 vorgesehen. Das Transport- und Mischfahrzeug 11 weist zudem Behälter 20 für flüssige Zugaben, wie ein Fließmittel, in die Mischeinrichtung 16 auf. Weiters ist eine Dosiereinheit 21 zur Dosierung von Wasser und/oder von flüssiger Zugabe aus dem Behälter 20 in die Mischeinrichtung 16 vorgesehen. Der Frischbeton wird an einer Ausgabevorrichtung 22 bereitgestellt. Das Transport- und Mischfahrzeug 11 weist ferner einen Wassertank 23 und einen Generator 24 auf, so dass erforderlichenfalls ein autarker Betrieb des Transport- und Mischfahrzeugs 11 ermöglicht wird.

Wie aus Fig. 2, 3 weiters ersichtlich, ist zudem ein Manövriertisch 26 mit einer Einhausung 27 vorgesehen, welcher das Ein- und Ausladen von Schüttgutbehältern 6, 7 erleichtert. Insbesondere kann ein Gabelstapler 31 von dem Transportfahrzeug 30 über den Manövriertisch 26 zu dem Transport- und Mischfahrzeug 11 gelangen, vgl. Fig. 4, 5. Weiters ist ein Steuerpult 28 ersichtlich, mit dem, insbesondere mittels Funkfernsteuerung, die Mischanlage und die Fördereinrichtung 19 betätigt wird werden.

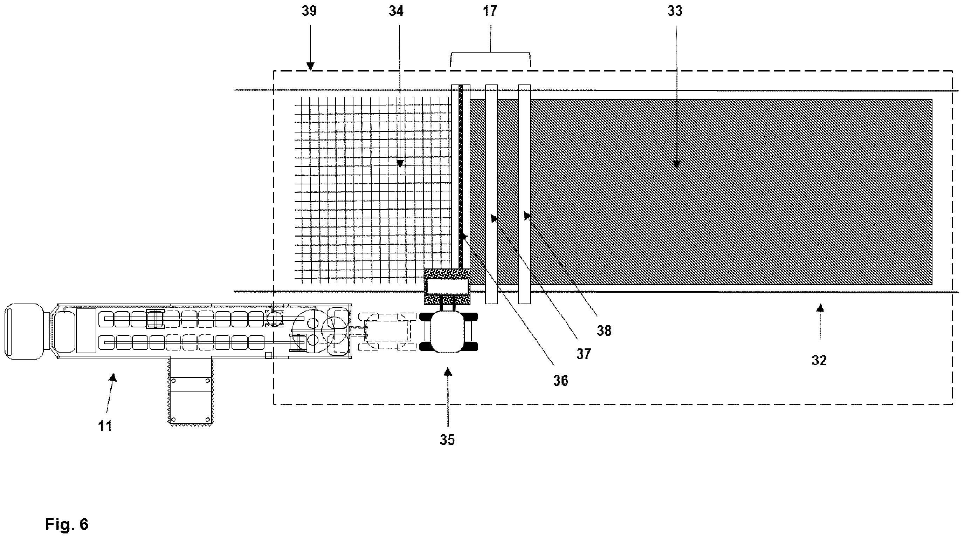

In Fig. 6 ist als Beispiel schematisch eine Baustelle 32 zur Aufbringung eines Fahrbahnbelages gezeigt, an welcher der UHPC zum Einsatz kommt. Der UHPC wird unmittelbar vor Ort an dem Transport- und Mischfahrzeug 11 zur Verfügung gestellt. Auf der Baustelle 32 erfolgt die Verarbeitung des UHPC in an sich herkömmlicher Weise. Dargestellt ist ein Verfestigungsbereich 33 eines bereits hergestellten Abschnittes des Fahrbahnbelages. Eine Bewehrungsmatte 34 ist in dem Bereich der Baustelle 32 vorgesehen, der als nächstes mit UHPC hergestellt wird. Bei der Verarbeitung des UHPC werden ein Radbagger 35, eine Querverteilungsschnecke 36, eine Rechenwalze 37 und eine Abzieh- und Rüttelbohle 38 verwendet. Weiters ist schematisch eine mobile Überdachung 39 veranschaulicht.

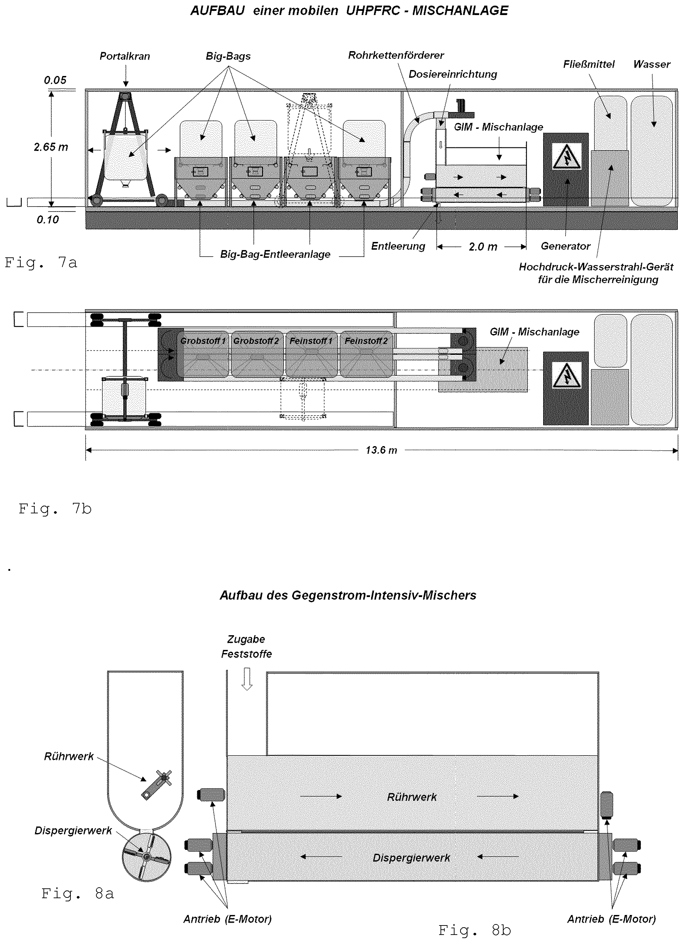

Fig. 7a, 7b geben einen Überblick über die wesentlichen Komponenten einer mobilen UHPC-Mischanlage. Wie bereits erwähnt, werden die Feststoffe trocken vorgemischt und in Feinstoff- bzw. Grobstoff-Big-Bags zur mobilen Mischanlage angeliefert. Dort stehen sowohl für die Feinstoff-Big-Bags, als auch für die Grobstoff-Big-Bags je zwei trichterförmige Entleerungsanlagen zur Verführung. Während aus dem einen der beiden Entleerungstrichter die Feststoffe in einen Mischer, hier ein GIM-Mischer ("Gegenstrom-Intensiv Mischer"), dosiert werden, wird bereits der nächste Big-Bag in den zweiten Entleerungstrichter eingefüllt. Falls die Big-Bags exakt die für eine Mischcharge benötigte Feststoffmenge enthalten, vereinfacht sich die Dosierung entsprechend. Der Transport der Big-Bags innerhalb der Mischanlage erfolgt mit einem vorzugsweise elektrisch betriebenen Portalkran, welcher schematisch in Fig. 7a, 7b dargestellt ist. Aus Platzgründen werden die Feststoffe mit Hilfe von Rohrkettenförderern von den Buffer-Behältern zum GIM-Mischer befördert. Hierfür werden vorzugsweise zwei getrennte Rohrketten-förderer eingesetzt. Der eine befördert die Feinstoffe und der andere die Grobstoffe.

Fig. 8a, 8b zeigen den prinzipiellen Aufbau des Gegenstrom-Intensiv-Mischers (GIM). Er weist ein Mischwerk mit einem Dispergierwerk und einem Rührwerk auf. Nachfolgend wird die Funktionalität und Konstruktion des GIM-Mischers genauer beschrieben.

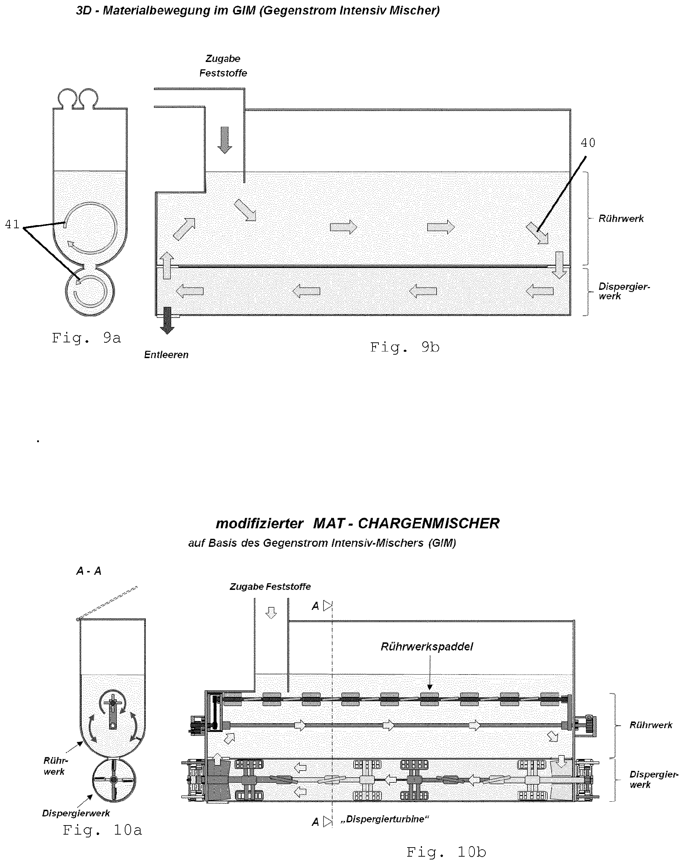

Fig. 9a, 9b zeigen schematisch, wie sich das Mischgut durch den Mischer bewegt, Fig. 9b die Gegenstrombewegung (Pfeile 40) in Längsrichtung und Fig. 9a die kreisförmig rotierende Bewegung (Pfeile 41) in Querrichtung der beiden rohr- bzw. trogartigen Mischwerke.

Fig. 10a, 10b zeigen schematisch den Aufbau eines für die vorliegende Anwendung modifizierten GIM-Mischers. Damit wird erreicht, dass während des Mischens möglichst wenig Luft in das Mischgut eingebracht wird, wobei zudem der Mischvorgang und die Entleerung beschleunigt und die Reinigung des Mischers mittels Hochdruck-Wasserstrahlen weitgehend automatisiert werden kann.

Die Art, wie die Zuschlagstoffe in den Mischer eingebracht werden, hat einen wesentlichen Einfluss auf das Mischergebnis. Sowohl die Feinstoffe (Phase 2), die auch die Bindemittel umfassen, als auch die Grobstoffe (Phase 3) mit den Fasern, werden möglichst gleichmäßig auf die Oberfläche des sich in Bewegung befindlichen Mischgutes gestreut. Die Feststoffe sollen in das Mischgut einsickern, ohne dabei Luft mitzunehmen.

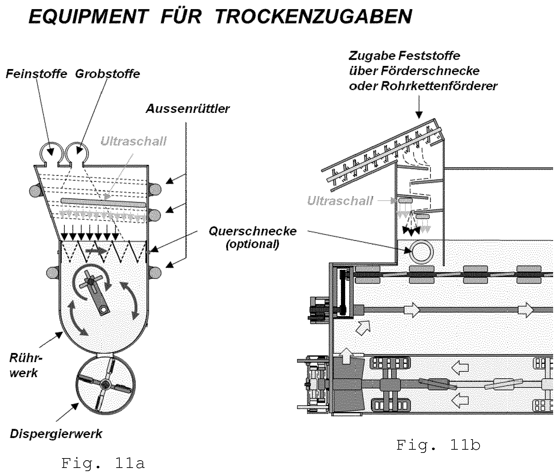

Die Fig. 11a, 11b zeigen eine bevorzugte Ausführungsform des Mischers. Die Zugabe der Feststoffe erfolgt bevorzugt über Schnecken- oder Rohrkettenförderer. Es können für die Feinstoffe und Grobstoffe getrennte Förderer vorgesehen sein. Dadurch vereinfacht sich der Dosierungsprozess. Die vorgemischten Feststoffzugaben fließen bevorzugt stufenförmig über vibrierende Bleche und werden dabei in ihre einzelnen Partikel aufgelöst, um schließlich über die Oberfläche des Mischgutes gestreut zu werden. Bevorzugt sind Außenrüttler vorgesehen, deren Drehzahl sich für die Fein- und Grobstoffe unterschiedlich einstellen lässt. Natürlich ist bei diesem Vorgang eine massive Staubbildung unvermeidbar. Deshalb sind bevorzugt die Dosiereinrichtung und der Mischer staubdicht verschlossen.

Damit die einzelnen Partikel in das Mischgut einsickern können, ist die Oberflächenspannung der Flüssigkeit bzw. der viskosen Suspension zu überwinden. Dies kann bevorzugt einerseits erreicht werden durch Bestrahlen der Oberfläche des Mischgutes mittels Ultraschall und anderseits durch Vibration der Eingabezone mittels Schalungsrüttlern. Mit Ultraschall lassen sich Wassertropfen aufteilen. Dadurch kann dann ein Wassertropfen viele Mehlkörner in sich einschließen.

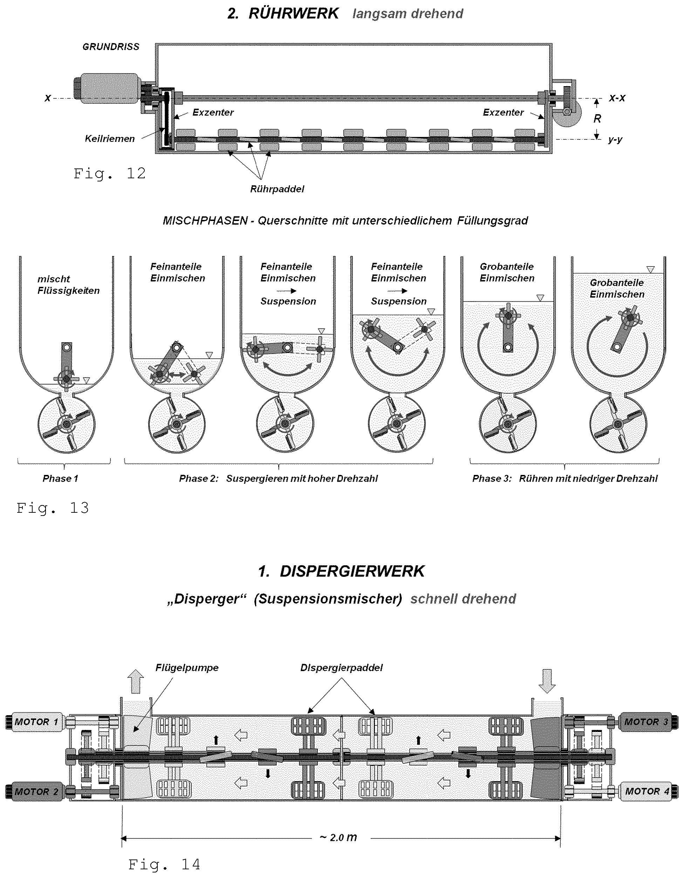

Wie aus der Zeichnung ersichtlich, erfolgt die Zugabe der Feststoffe bevorzugt am Eingang eines Rührwerkes. Im Rührwerk werden dann die Zugaben in einer dreidimensionalen Strömung mit dem Mischgut vermischt. Das Rührwerk (vgl. Fig. 12, 13) weist bevorzugt eine insbesondere langsam rotierende Welle y-y auf, die in einer bevorzugten Ausführungsform mit vorzugsweise vollflächigen (d.h. lochfreien) Paddeln bestückt ist. Die Welle y-y lässt sich bevorzugt zudem kreisförmig um eine zentrale Achse x-x des Rührwerkes bewegen. Der Kreisradius R (d.h. der Exzenter der Welle y-y) ist geometrisch derart ausgelegt, dass die rotierenden Paddel benachbart der Wandung des Rührwerkes vorbeistreichen, vorzugsweise jedoch ohne diese zu berühren.

Am Anfang der Phase 2, in welcher das Mischgut noch recht flüssig und damit selbstentlüftend ist, durchstoßen die Paddel in der gezeigten Ausführungsform zwar noch die Mischgutoberfläche (Fig. 13). Später in der Phase 2 und in der gesamten Phase 3, wo sich die Suspension zunehmend zum Frischbeton "eindickt", arbeitet das Rührwerk dann ausschließlich unterhalb der freien Oberfläche des Mischgutes. Um die Paddelwelle in diesem Sinne zu steuern, misst eine Sensorik in Realtime laufend den aktuellen Mischgutpegel. Auf diese Weise lässt sich vermeiden, dass das Mischwerkzeug Luft in das Mischgut einrührt.

Die Rührwerkspaddel sind bevorzugt derart schräggestellt, dass sich drehzahlabhängig eine entsprechende Vorwärtsbewegung des Mischgutes einstellt. Am Ende des Rührwerkes fließt das Mischgut bevorzugt in das darunter liegende Dispergierwerk.

Fig. 13 zeigt Querschnitte des Mischers bei unterschiedlichem Befüllungsgrad. Nachdem die Feinstoffe kontinuierlich (sukzessive) eingebracht worden sind, kann danach unverzüglich mit der sukzessiven Zugabe der Grobstoffe begonnen werden.

Das Dispergierwerk (vgl. Fig. 14) hat die Funktion, in der Phase 2 des Mischprozesses die Feinstoffe kolloidal aufzuschließen und verhindert dadurch jegliche Klumpenbildung im Gemisch. Der spätere chemische Abbindeprozess läuft dadurch intensiver und effizienter ab. Infolge dessen verbessert sich entweder die Betongüte oder es lässt sich bei gleichbleibender Betongüte Zement einsparen. Das Dispergierwerk arbeitet mit Öffnungen aufweisenden Dispergierpaddeln, die vorzugsweise mit hoher Drehzahl um eine zentrale Achse rotieren. In der Dispergierzone wird bevorzugt eine turbulente Strömung mit Kaviationserscheinungen an den scharfen Kanten und Löchern der Paddel erzeugt.

Um diesen Prozess besonders intensiv zu gestalten, wird die Dispersionszone bevorzugt in vier Abschnitte unterteilt, in denen die Paddel jeweils in gegenläufiger Drehrichtung rotieren. In den Zonen zwischen gegenläufigen Flügeln kommt es zu besonders hohen Turbulenzen und infolge dessen sehr rasch zum angestrebten kolloidalen Aufschluss innerhalb der Suspension.

An beiden Enden oder nur am Anfang des Dispergierrohres sind bevorzugt Flügel angeordnet, die wie Pumpen wirken. Auch die Paddel bewirken durch ihre geringe Schrägstellung eine entsprechende Vorwärtsbewegung des Mischgutes. Dadurch wird das Mischgut am Ende des Dipergierwerkes durch eine Öffnung in das darüberliegende Rührwerk hochgedrückt.

Die Phase 2 ist beendet, nachdem alle Feinstoffe den gesamten Mischprozess (Rühren und Dispergieren) einmal vollständig durchlaufen haben und damit das Mischgut in eine homogene Suspension übergegangen ist.

Es folgt in der Phase 3 die Zugabe der Grobstoffe in derselben Weise, wie zuvor in der Phase 2 die Feinstoffe eingestreut wurden. Weil das Mischgut bereits in der Phase 2 kolloidal aufgeschlossen wurde, übernimmt das Dispergierwerk in der Phase 3 die Funktion eines zusätzlichen Rührwerkes. Es läuft daher bevorzugt in der Phase 3 wie das Rührwerk mit einer entsprechend niedrigeren Drehzahl.

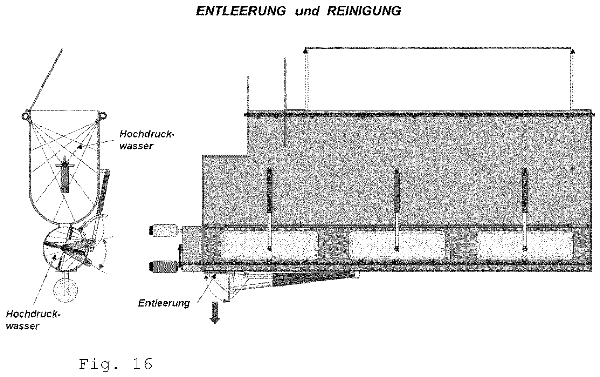

Nachdem die Zugabe der Grobstoffe beendet ist, kann mit der Entleerung des Mischers begonnen werden. Während der Entleerung (Fig. 16) durch eine Öffnung unten am Ende des Dispergierrohres, kann das Rührwerk die zuletzt eingebrachten Feststoffe noch vollständig einmischen.

### Beispiele

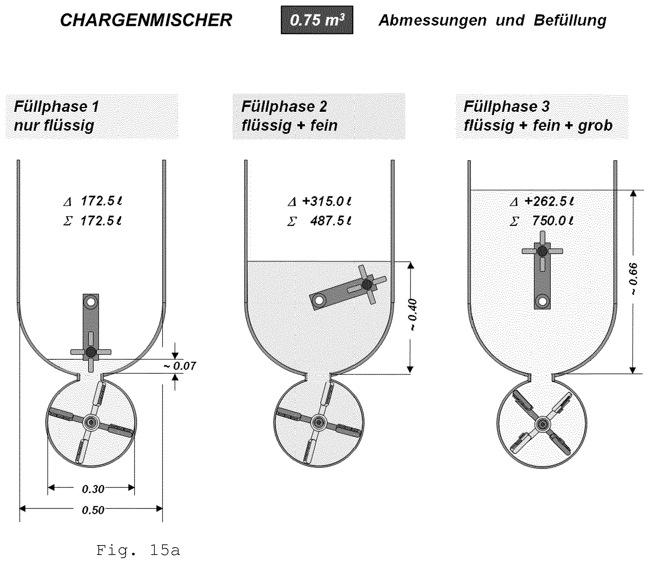

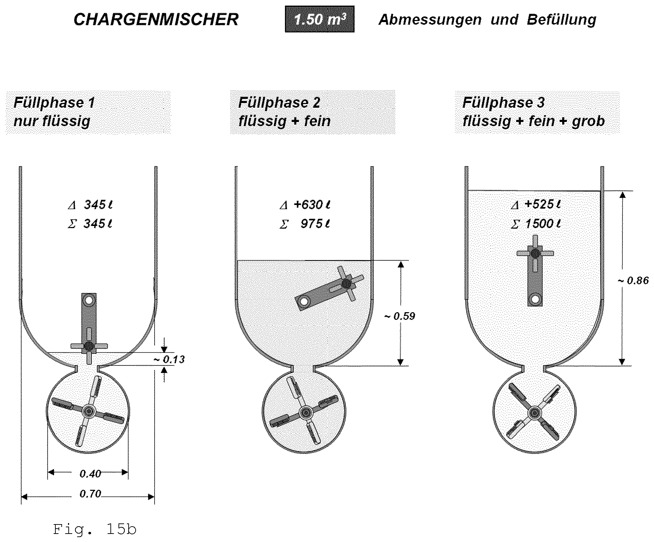

Der Mischvorgang wird nun nochmals zusammenfassend am Beispiel eines Mischers mit einer Mischleistung von 0.75 Kubikmeter (m³) pro Charge (Fig. 15a) dargelegt. Fig. 15b zeigt dasselbe für einen größeren Mischer mit einer Mischleistung von 1.5 m³ pro Charge.

Zuerst werden in der Füllphase 1 die flüssigen Zugaben in den Mischer eingebracht und mit einer relativ geringen Drehzahl im Dispergierwerk miteinander vermischt. Die Mischer sind derart konstruiert, dass das Volumen des Dispergierrohres kleiner ist, als das Gesamtvolumen aller flüssigen Zugaben. Am Ende der Füllphase 1 liegt deshalb der Flüssigkeitsspiegel im Bereich des Rührwerkes.

In der Füllphase 2 füllt sich das Rührwerk durch die Zugabe der Feinstoffe sukzessive und das Rührwerkzeug taucht schließlich gänzlich in das Mischgut ein. Die dann knapp unter der Oberfläche des Mischgutes langsam rotierenden Flügel des Rührwerkes können in dieser Phase sogar für die Entlüftung der Suspension förderlich sein.

Mit der sukzessiven Zugabe der Grobstoffe in der Füllphase 3 steigt der Mischgutspiegel weiter an. Die Konsistenz wird zunehmend steifer und damit sinkt die Fähigkeit des Mischgutes zur Selbstentlüftung. Weil aber in dieser Phase bereits das gesamte Mischwerkzeug unter der Mischgutoberfläche arbeitet, verursacht dieses keinen Lufteintrag mehr.

Um die Mischdauer klein zu halten, ist es günstig, wenn auch die Entleerung des Mischers möglichst rasch vor sich gehen kann. Hierfür ist bevorzugt eine Klappe an der Unterseite des Dispergierwerkes vorgesehen, die beispielsweise hydraulisch geöffnet und geschlossen werden kann (vgl. Fig. 16)

Die Reinigung des Mischers erfolgt beispielsweise durch Hochdruckwasserstrahlen, während sich die Mischwerkzeuge langsam drehen. Zuerst wird das Rührwerk über fix montierte Düsen gereinigt (Bild 16 oben links), die am oberen Rand des Troges angeordnet sind. Am Dispergierwerk sind bei diesem Ausführungsbeispiel seitlich rechteckige Fensteröffnungen vorhanden, die im Mischbetrieb durch Klappen verschlossen sind. Diese Klappen lassen sich beispielsweise hydraulisch öffnen. Gleichzeitig wird ein mit Düsen bestücktes Wasserrohr nach oben vor diese Öffnungen geklappt. Nun wird der Innenraum des Dispergierwerkes mittels Hochdruckwasserstrahlen gereinigt (Bild 16 links unten). Das Abwasser, das beim Reinigen des Mischers anfällt, fließt bei diesem Ausführungsbeispiel durch die Entleerungsöffnung und wird dort in Behälter abgefüllt und entsorgt.

## Patentansprüche

1. Verfahren zur Herstellung eines Betonbaustoffes, insbesondere eines Faserbetons, besonders bevorzugt eines Ultra-Hochleistungs-Faserbetons, für eine Baustelle mit den Schritten:
- Abfüllen einer Grobkorn-Schüttgutmischung in einen Grobkorn-Schüttgutbehälter (6);
- Abfüllen einer Feinkorn-Schüttgutmischung in einen Feinkorn-Schüttgutbehälter (7), wobei die Feinkorn-Schüttgutmischung ein Bindemittel aufweist;
- Verarbeiten der Grobkorn-Schüttgutmischung und der Feinkorn-Schüttgutmischung unter Zugabe von Wasser zu dem Betonbaustoff, wobei die Grobkorn-Schüttgutmischung einen Anteil von mehr als 60 Massenprozent einer Gesteinskörnung mit Korngrößen von mehr als im Wesentlichen 0,04 mm aufweist, wobei die Feinkorn-Schüttgutmischung einen Anteil von mehr als 60 Massenprozent eines Feinkorngemischs mit Korngrößen von kleiner als im Wesentlichen 0,2 mm aufweist, wobei das Feinkorngemisch ein Gesteinsmehl aufweist.

2. Verfahren nach Anspruch 1, **dadurch gekennzeichnet, dass** das Verarbeiten der Grobkorn-Schüttgutmischung und der Feinkorn-Schüttgutmischung unter Zugabe von Wasser zu dem Betonbaustoff in drei jeweils zeitlich aufeinanderfolgenden Phasen erfolgt:
- zunächst wird das Wasser mit zumindest einer weiteren flüssigen Beigabe, insbesondere mit einem flüssigen Fließmittel und/oder mit einem Nanosilica und/oder mit einem Abbindebeschleuniger und/oder mit einem Abbindeverzögerer, miteinander zu einem flüssigen Gemisch verarbeitet;
- danach wird die Feinkorn-Schüttgutmischung von dem Feinkorn-Schüttgutbehälter in das flüssige Gemisch eingebracht und zu einer Suspension dispergiert;
- danach wird die Grobkorn-Schüttgutmischung aus dem Grobkorn-Schüttgutbehälter in die Suspension gegeben.

3. Verfahren nach Anspruch 2, **dadurch gekennzeichnet, dass** die Feinkorn-Schüttgutmischung von dem Feinkorn-Schüttgutbehälter auf die Oberfläche des Wassers, insbesondere des flüssigen Gemisches, abgegeben wird, wobei sich das Wasser währenddessen in Bewegung befindet und/oder dass die Grobkorn-Schüttgutmischung von dem Grobkorn-Schüttgutbehälter auf die Oberfläche der Suspension aus Wasser und Feinkorn-Schüttgutmischung abgegeben wird, wobei sich die Suspension währenddessen in Bewegung befindet.

4. Verfahren nach Anspruch 3, **dadurch gekennzeichnet, dass** die Oberfläche des Wassers bei der Abgabe der Feinkorn-Schüttgutmischung und/oder die Oberfläche der Suspension bei der Abgabe der Grobkorn-Schüttgutmischung mit einem Ultraschall bestrahlt und/oder mittels eines Rüttlers zum Vibrieren gebracht wird.

5. Verfahren nach einem der Ansprüche 1 bis 4, **dadurch gekennzeichnet, dass** das Verarbeiten der Grobkorn-Schüttgutmischung und der Feinkorn-Schüttgutmischung zu dem Betonbaustoff auf der Baustelle (32) erfolgt und/oder dass das Abfüllen der Grobkorn-Schüttgutmischung in den Grobkorn-Schüttgutbehälter (6) und/oder das Abfüllen der Feinkorn-Schüttgutmischung in den Feinkorn-Schüttgutbehälter (7) in einem Werk (7) vorgenommen wird.

6. Verfahren nach einem der Ansprüche 1 bis 5, **dadurch gekennzeichnet, dass** die Grobkorn-Schüttgutmischung einen Anteil von mehr als 60 Massenprozent, bevorzugt von mehr als 75 Massenprozent, besonders bevorzugt von mehr als 90 Massenprozent, insbesondere von mehr als 99 Massenprozent, einer Gesteinskörnung mit Korngrößen von mehr als im Wesentlichen 0,05 mm, besonders bevorzugt von mehr als im Wesentlichen 0,06 mm, insbesondere von mehr als im Wesentlichen 0,125 mm, aufweist, wobei die Korngrößen der Gesteinskörnung der Grobkorn-Schüttgutmischung bevorzugt kleiner als im Wesentlichen 10 mm, besonders bevorzugt kleiner als 9 mm, insbesondere kleiner als im Wesentlichen 8 mm, sind.

7. Verfahren nach einem der Ansprüche 1 bis 6, **dadurch gekennzeichnet, dass** die Grobkorn-Schüttgutmischung einen Anteil von Fasern, insbesondere Stahlfasern, aufweist.

8. Verfahren nach einem der Ansprüche 1 bis 7, **dadurch gekennzeichnet, dass** die Feinkorn-Schüttgutmischung einen Anteil von mehr als 60 Massenprozent, bevorzugt von mehr als 75 Massenprozent, besonders bevorzugt von mehr als 90 Massenprozent, insbesondere von mehr als 99 Massenprozent, eines Feinkorngemischs mit Korngrößen von kleiner als im Wesentlichen 0,15 mm, insbesondere kleiner als im Wesentlichen 0,125 mm, aufweist.

9. Verfahren nach einem der Ansprüche 1 bis 8, **dadurch gekennzeichnet, dass** das Bindemittel Zement, insbesondere zudem Mikrosilika und/oder Nanosilika aufweist.

10. Verfahren nach Anspruch 8 oder 9, **dadurch gekennzeichnet, dass** das Feinkorngemisch ein Fließmittel im trockenen Zustand und/oder ein Verzögerungsmittel im trockenen Zustand und/oder einen Entschäumer im trockenen Zustand enthält.

11. Grobkorn-Schüttgutbehälter (6), insbesondere Bigbag, befüllt mit einer Grobkorn-Schüttgutmischung, welche einen Anteil von mehr als 60 Massenprozent, bevorzugt von mehr als 75 Massenprozent, besonders bevorzugt von mehr als 90 Massenprozent, insbesondere von mehr als 99 Massenprozent, einer Gesteinskörnung mit Korngrößen von mehr als im Wesentlichen 0,04 mm, bevorzugt von mehr als im Wesentlichen 0,05 mm, besonders bevorzugt von mehr als im Wesentlichen 0,06 mm, aufweist.

12. Feinkorn-Schüttgutbehälter (7), insbesondere Bigbag, befüllt mit einer Feinkorn-Schüttgutmischung, welche einen Anteil von mehr als 60 Massenprozent, bevorzugt von mehr als 75 Massenprozent, besonders bevorzugt von mehr als 90 Massenprozent, insbesondere von mehr als 99 Massenprozent, eines Feinkorngemischs mit Korngrößen von kleiner im Wesentlichen 0,2 mm, bevorzugt kleiner im Wesentlichen 0,15 mm, insbesondere kleiner im Wesentlichen 0,125 mm, aufweist.

13. Transport- und Mischfahrzeug (11), mit einer Lagereinrichtung (15), an der ein Feinkorn-Schüttgutbehälter (7) nach Anspruch 12 und ein Grobkorn-Schüttgutbehälter (6) nach Anspruch 11 angebracht sind, mit einer Mischeinrichtung (16) zum Verarbeiten der Grobkorn-Schüttgutmischung und der Feinkorn-Schüttgutmischung zu dem Betonbaustoff.

14. Transport- und Mischfahrzeug nach Anspruch 13, **gekennzeichnet durch** eine Fördereinrichtung (19), insbesondere eine Laufkatzeneinheit (19a, 19b), zum Fördern des Grobkorn-Schüttgutbehälters (6) und/oder des Feinkorn-Schüttgutbehälters (7) von der Lagereinrichtung (15) zu der Mischeinrichtung (16).

15. Transport- und Mischfahrzeug nach Anspruch 12 oder 13, **dadurch gekennzeichnet, dass** die Mischeinrichtung (16) einen Planetenmischer (18) und/oder dass die Mischeinrichtung (16) einen Kolloidalmischer (17) aufweist.
